# EUROPEAN PATENT APPLICATION

(11) **EP 4 657 638 A1**
(43) Date of publication of application: **03.12.2025**
(21) Application number: 25160072.2
(22) Date of filing: 25.02.2025
(51) Int. Cl.: H01M 50/342, H01M 50/367, H01M 10/0525, H01M 50/107, H01M 50/15

(54) **SECONDARY BATTERY INCLUDING DEGASSING DEVICE AND METHOD OF MANUFACTURING THE SAME**

(30) Priority: 27.05.2024 KR 20240068859
(71) Applicant: SAMSUNG SDI CO., LTD., Yongin-si, Gyeonggi-do 17084 (KR)
(72) Inventor: JEONG, Myungha, 17084 Yongin-si (KR); BAEK, Soomin, 17084 Yongin-si (KR)
(74) Representative: Marks & Clerk LLP

(57) **Abstract**

A secondary battery includes a case with an opening therein, an electrode assembly accommodated in the case, a cap plate bonded to the opening of the case, a degassing device bonded to a gas discharge hole in one of the case and the cap plate to discharge gas from inside the case, wherein the degassing device includes a central portion exposed to an outside of the case through the gas discharge hole, a bonding portion bonded to a circumferential periphery of the gas discharge hole, a peripheral portion that is a surface for connecting the bonding portion and the central portion, a notch in the peripheral portion along an outline of the bonding portion, a main hinge on a line defined by the notch, and one or more sub-hinges parallel to the main hinge at one or more locations spaced apart from the main hinge.

## Description

### BACKGROUND

### 1. Field

Embodiments relate to a degassing device of a secondary battery, for example a degassing device installed on an exterior material of a secondary battery, a secondary battery including the same, and a method of manufacturing the secondary battery.

### 2. Description of the Related Art

Different from primary batteries that cannot be recharged, secondary batteries are batteries that can be charged and discharged. A secondary battery mainly includes an electrode assembly including a positive electrode plate, a separator, and a negative electrode plate, a case (or a can) that accommodates the electrode assembly, and a cap assembly including external terminals through which the electrode assembly may be connected to an external power source or load.

A secondary battery includes a vent, that is, a degassing device, for discharging gas generated inside a case. In a degassing device, a notch is ruptured due to pressure of gas, which is generated by the overcharging or abnormal operation of a battery, to discharge the gas to the outside, thereby preventing an explosion of the secondary battery.

A degassing device should be opened by pressure inside a battery to discharge gas, but the degassing device may be caught by structures such as a busbar, a housing, and a gas/heat discharge passage which are components of a battery module/pack and thus cannot be opened sufficiently, a gas discharge area may be limited. **In** addition, in this case, a degassing device may damage a wire, cause a short circuit, or block a gas/heat discharge passage.

The above information disclosed in this Background section is for enhancement of understanding of the background of the present disclosure, and therefore, it may contain information that does not constitute related art.

### SUMMARY

The present disclosure is directed to providing an improved degassing device capable of securing a sufficient gas discharge area when the degassing device is opened by pressure of gas generated in a battery.

According to one aspect of the present invention, there is provided a secondary battery, the secondary battery including a case with an opening therein, an electrode assembly accommodated in the case, a cap plate bonded to the opening of the case, and a degassing device bonded to a gas discharge hole in one of the case and the cap plate to discharge gas from inside the case, wherein the degassing device includes a central portion exposed to an outside of the case through the gas discharge hole, a bonding portion bonded to a circumferential periphery of the gas discharge hole, a peripheral portion that is a surface for connecting the bonding portion and the central portion, a notch in the peripheral portion along an outline of the bonding portion, a main hinge on a line defined by the notch, and one or more sub-hinges parallel to the main hinge at one or more locations spaced apart from the main hinge.

The peripheral portion of the degassing device may have a sloped surface that rises from the bonding portion toward the central portion.

The one or more sub-hinges of the degassing device may span from a location adjacent to a first point of the notch to a location adjacent to a second point of the notch opposite to the first point.

A cross-sectional shape of the main hinge, a cross-sectional shape of the one or more sub-hinges, and a cross-sectional shape of the notch in the degassing device are each one shape of a trapezoid shape, an angled U-shape, and a round U-shape.

A groove depth of the main hinge and a groove depth of the one or more sub-hinges in the degassing device may each be less than a groove depth of the notch.

A width of the main hinge and a width of the one or more sub-hinges in the degassing device may each be greater than a width of the notch.

Each of a wall thickness of the main hinge and a wall thickness of the one or more sub-hinges in the degassing device is 1.1 times to 3 times greater than a wall thickness of the notch.

At least one of the main hinge, the one or more sub-hinges, and the notch of the degassing device may face an inside of the case.

The notch of the degassing device may have an opening pointing opposite to openings of the main hinge and the one or more sub-hinges.

The one or more sub hinges may alternate between facing an inside of the case and facing the outside of the case.

According to another aspect of the present invention, there is provided a method of manufacturing a secondary battery, the method including forming a gas discharge hole in one of a case and a cap plate, manufacturing a degassing device for discharging gas inside the case, and bonding the degassing device to the gas discharge hole, wherein the manufacturing of the degassing device includes forming a bonding portion to be bonded to a circumferential periphery of the gas discharge hole formed in one of the case and the cap plate, forming a central portion exposed to an outside of the case through the gas discharge hole, forming a peripheral portion that is a surface for connecting the bonding portion and the central portion, forming a notch in the peripheral portion along an outline of the bonding portion, forming a main hinge on a line defined by the notch, and forming one or more sub-hinges to be parallel to the main hinge at one or more locations spaced apart from the main hinge.

The one or more sub-hinges of the degassing device may span from a location adjacent to a first point of the notch to a location adjacent to a second point of the notch opposite to the first point.

At least one of the main hinge, the one or more sub-hinges, and the notch of the degassing device may face an inside of the case.

The notch of the degassing device may be formed with an opening pointing opposite to an opening of the main hinge and one or more openings of the one or more sub-hinges.

The one or more sub-hinges may include a plurality of sub-hinges which are formed alternately between facing an inside of the case and facing the outside of the case.

The manufactured secondary battery may be as defined above or below. The manufactured degassing device may be as defined below.

According to another aspect of the present invention, there is provided a degassing device for a secondary battery, which is bonded to a gas discharge hole in one of a case and a cap plate of the secondary battery to discharge gas from inside the case, the degassing device including a central portion exposed to an outside of the case through the gas discharge hole, a bonding portion bonded to a circumferential periphery of the gas discharge hole, a peripheral portion that is a surface for connecting the bonding portion and the central portion, a notch in the peripheral portion along an outline formed by the peripheral portion, a main hinge on a line defined by the notch, and one or more sub-hinges parallel to the main hinge at one or more locations spaced apart from the main hinge.

The one or more sub-hinges may span from a location adjacent to a first point of the notch to a location adjacent to a second point of the notch opposite to the first point.

At least one of the main hinge, the one or more sub-hinges, and the notch may face an inside of the case.

The notch may have an opening pointing opposite to an opening of the main hinge and one or more openings of the one or more sub-hinges.

The one or more sub-hinges may include a plurality of sub-hinges which may alternate between facing an inside of the case and facing the outside of the case.

The degassing device may have features of the secondary battery as defined above or below.

However, aspects of the present disclosure are not limited to the above, and other aspects not specifically mentioned herein, and aspects of the present disclosure that would address such problems, will be clearly understood by those of ordinary skill in the art from the description of the present disclosure below.

At least some of the above and other features of the invention are set out in the claims.

### BRIEF DESCRIPTION OF THE DRAWINGS

Features will become apparent to those of ordinary skill in the art by describing in detail embodiments with reference to the attached drawings, in which:
FIG. 1 is a cross-sectional view of a cylindrical secondary battery according to one or more embodiments of the present disclosure;
FIG. 2 is a top perspective view of a prismatic secondary battery according to one or more embodiments of the present disclosure;
FIG. 3 is a cross-sectional view along line I-I' of FIG. 2;
FIG. 4 is an exploded perspective view of a prismatic battery according to another embodiment of the present disclosure;
FIG. 5 is a schematic view illustrating a configuration of a degassing device according to one or more embodiments of the present disclosure;
FIG. 6A is a top perspective view of a degassing device according to one or more embodiments of the present disclosure;
FIG. 6B is a bottom perspective view of the degassing device of FIG. 6A;
FIG. 6C is a bottom view of the degassing device of FIG. 6A;
FIG. 6D is a cross-sectional view along line Y-Y of FIG. 6C.
FIGS. 7A to 7C are views for describing the operation of a degassing device according to one or more embodiments of the present disclosure;
FIG. 8 is a cross-sectional view for describing problems of a comparative example of a degassing device;
FIG. 9A is a top perspective view of a degassing device according to one or more other embodiments of the present disclosure;
FIG. 9B is a bottom perspective view of the degassing device of FIG. 9A;
FIG. 9C is a bottom view of the degassing device of FIG. 9A;
FIG. 9D is a cross-sectional view along line Y'-Y' of FIG. 9C;
FIG. 10 is a cross-sectional view for describing the operation of the degassing device shown in FIGS. 9A to 9D according to an embodiment;
FIG. 11 illustrates a modified example of an embodiment of FIG. 9D;
FIG. 12 illustrates another modified example of the embodiment of FIG. 9D;
FIG. 13 is a cross-sectional view of a main hinge or sub-hinge and a notch according to one or more embodiments of the present disclosure;
FIG. 14 is a view of a secondary battery module in which secondary batteries are arranged according to one or more embodiments of the present disclosure;
FIG. 15 is a view of a secondary battery pack including the secondary battery module illustrated in FIG. 14; and
FIG. 16 is a conceptual view of a vehicle including the secondary battery pack illustrated in FIG. 15.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey implementations to those skilled in the art.

In the drawing figures, the dimensions of layers and regions may be exaggerated for clarity of illustration. It will also be understood that if a layer or element is referred to as being "on" another layer or substrate, it can be directly on the other layer or substrate, or intervening layers may also be present. Further, it will be understood that if a layer is referred to as being "under" another layer, it can be directly under, and one or more intervening layers may also be present. In addition, it will also be understood that if a layer is referred to as being "between" two layers, it can be the only layer between the two layers, or one or more intervening layers may also be present. Like reference numerals refer to like elements throughout.

The terms or words used in the present specification and claims are not to be limitedly interpreted as general or dictionary meanings and should be interpreted as meanings and concepts that are consistent with the technical idea of the present disclosure on the basis of the principle that an inventor can be his/her own lexicographer to appropriately define concepts of terms to describe his/her disclosure in the best way.

The embodiments described in this specification and the configurations shown in the drawings are only some of one or more embodiments of the present disclosure and do not represent all of the aspects of the present disclosure. Accordingly, it should be understood that there may be various equivalents and modifications that can replace or modify one or more embodiments described herein at the time of filing this application.

It will be understood that if an element or layer is referred to as being "on," "connected to," or "coupled to" another element or layer, it may be directly on, connected, or coupled to the other element or layer or one or more intervening elements or layers may also be present. If an element or layer is referred to as being "directly on," "directly connected to," or "directly coupled to" another element or layer, there are no intervening elements or layers present. For example, if a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. As used herein, the term "and/or" includes any and all combinations of one or more of the associated listed items. Further, the use of "may" if describing embodiments of the present disclosure relates to "one or more embodiments of the present disclosure." Expressions, such as "at least one of" and "any one of," if preceding a list of elements, modify the entire list of elements and do not modify the individual elements of the list. If phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," if used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification such that amending to expressly recite any such subranges would comply with the requirements of 35 U.S.C. § 112(a) and 35 U.S.C. § 132(a).

References to two compared elements, features, etc. as being "the same" may mean that they are "substantially the same." Thus, the phrase "substantially the same" may include a case having a deviation that is considered low in the art, for example, a deviation of 5% or less. In addition, if a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may contact the upper (or lower) surface of the element, and another element may also be interposed between the element and the arbitrary element located on (or under) the element.

In addition, it will be understood that if a component is referred to as being "linked," "coupled," or "connected" to another component, the elements may be directly "coupled," "linked" or "connected" to each other, or another component may be "interposed" between the components."

Throughout the specification, if "A and/or B" is stated, it means A, B or A and B, unless otherwise stated. That is, "and/or" includes any or all combinations of a plurality of items enumerated. If "C to D" is stated, it means C or more and D or less, unless otherwise specified.

The terminology used herein is for the purpose of describing embodiments of the present disclosure and is not intended to limit the present disclosure.

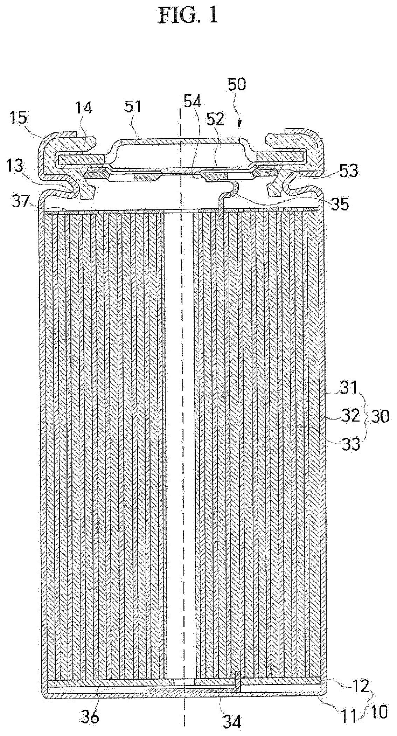

FIG. 1 illustrates a cylindrical secondary battery. As shown in FIG. 1, a secondary battery includes an electrode assembly 30, a case 10 accommodating the electrode assembly and an electrolyte therein, a cap assembly 50 coupled to an opening of the case 10 to seal the case 10, and an insulating plate 37 positioned between the electrode assembly 30 and the cap assembly 50 inside the case 10.

The electrode assembly 30 may include a separator 32 and a first electrode 33 and a second electrode 31 positioned with the separator interposed therebetween and may be wound in a jelly-roll shape.

The first electrode 33 includes a first substrate and a first active material layer on the first substrate. A first lead tab 35 may extend outwardly from a first uncoated portion of the first substrate where the first active material layer is not located, and the first lead tab 35 may be electrically connected to the cap assembly 50.

The second electrode 31 may include a second substrate and a second active material layer on the second substrate. A second lead tab 34 may extend outwardly from a second uncoated portion of the second substrate where the second active material layer is not located, and the second lead tab 34 may be electrically connected to the case 10. The first lead tab 35 and the second lead tab 34 may extend in opposite directions.

The first electrode 33 may act as a positive electrode. In such an embodiment, the first substrate may be made of, for example, an aluminum foil, and the first active material layer may include, for example, a transition metal oxide. The second electrode 31 may act as a negative electrode. In such an embodiment, the second substrate may be made of, for example, a copper foil or a nickel foil, and the second active material layer may include graphite, for example.

The separator prevents a short circuit between the first electrode 33 and the second electrode 31 while allowing movement of lithium ions therebetween. The separator 32 may be made of, for example, a polyethylene film, a polypropylene film, a polyethylene-polypropylene film, or the like.

The case 10 accommodates the electrode assembly 30 and, together with the cap assembly 50, forms the external appearance of the secondary battery. The case 10 may have a substantially cylindrical body portion 12 and a bottom portion 11 connected to one side (e.g., to one end) of the body portion. A beading part 13 (e.g., a bead) deformed inwardly may be formed in the cylindrical body portion 12, and a crimping part 15 (e.g., a crimp) bent inwardly may be formed at an open end of the body portion 12.

The beading part 13 can reduce or prevent movement of the electrode assembly 30 inside the case 10 and can facilitate seating of the gasket 14 and the cap assembly 50. The crimping part 15 may firmly fix the cap assembly 50 by pressing the edge of the case 10 against the gasket 14. The case 10 may be formed of steel plated with nickel, for example.

The cap assembly 50 may be fixed to the inside of the crimping part 15 by the gasket 14 to seal the case. The cap assembly 50 may include a cap up 51, a safety vent 52, a cap down 53, an insulating member, and a sub plate 54 but is not limited thereto and may be modified in various ways.

The cap up 51 may be positioned at the uppermost part of the cap assembly 50. The cap up 51 may include a terminal part that protrudes upwardly and is connected to an external circuit, and an outlet for discharging gas may be arranged around the terminal part.

The safety vent 52 (or degassing device) may be located under the cap up 51. The safety vent 52 may include a protrusion part that protrudes convexly downwardly and is connected to the sub plate 54, and at least one notch may be formed in the safety vent 52around the protrusion part.

If gas is generated due to overcharging or abnormal operation of the secondary battery, the protrusion part is deformed upwardly by the pressure and separates from the sub plate 54 while the safety vent is cut (e.g., bursts or tears) along the notch. The cut safety vent may prevent the secondary battery from exploding by allowing for the gas to be discharged to the outside.

The cap down 53 may be below the safety vent 52. The cap down 53 may have a first opening for exposing the protrusion part of the safety vent and a second opening for gas discharge. The insulating member may be positioned between the safety vent 52 and the cap down 53 to insulate the safety vent 52 and the cap down 53.

The sub plate 54 may be under the cap down 53. The sub plate 54 may be fixed to a lower surface of the cap down 53 to block the first opening of the cap down 53, and the protrusion part of the safety vent 52 may be fixed to the sub plate 54. The first lead tab 35, which is drawn out from the electrode assembly 30, may be fixed to the sub plate 54. Accordingly, the cap up 51, the safety vent 52, the cap down 53, and the sub plate 54 may be electrically connected to the first electrode 33 of the electrode assembly 30.

The insulating plate 37 may be positioned to be in contact with the electrode assembly 30 below the beading part 13. A similar insulating plate 36 may be positioned below the electrode assembly. The insulating plate 37 may have a tab opening through which the first lead tab 35 is drawn out. The cap assembly 50, which is electrically connected to the first electrode 33 by the first lead tab 35, may face the electrode assembly 30 with an insulating plate 37 interposed therebetween and may maintain a state of being insulated (e.g., electrically insulated) from the electrode assembly 30 by the insulating plate 37.

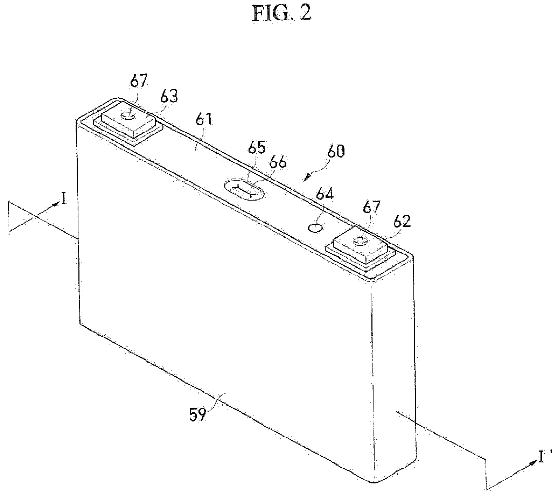

FIG. 2 is a top perspective view of a prismatic secondary battery, according to one or more embodiments of the present disclosure.

First, the external appearance of the prismatic secondary battery illustrated in FIG. 2 will be described.

A case 59 defines an overall appearance of the prismatic secondary battery, and may be made of a conductive metal, such as aluminum, aluminum alloy, or nickel-plated steel. In addition, the case 59 may provide a space for accommodating an electrode assembly therein.

A cap assembly 60 may include a cap plate 61 that covers the opening of the case 51. In some examples, the case 59 and the cap plate 61 may be made of a conductive material. Here, a first terminal 63 and a second terminal 62 may be electrically connected to respective positive and negative (or negative and positive) electrodes inside the case, and may be installed to protrude outward through the cap plate 61.

The cap plate 61 may be equipped with an electrolyte injection port 64 formed to install a sealing plug (or seal pin), and a vent or degassing device 66 joined to a gas discharge hole 65. The degassing device 66 is for discharging gas generated inside the secondary battery.

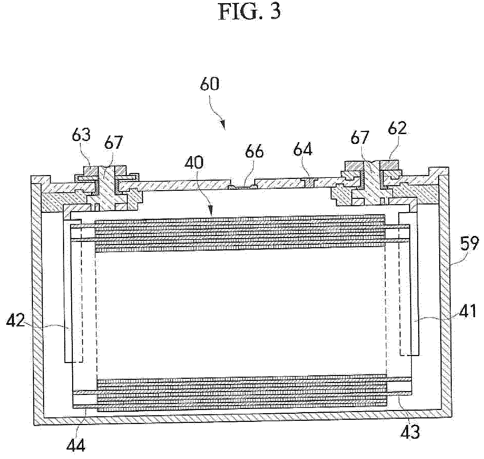

FIG. 3 is a cross-sectional view taken along the line I-I' of FIG. 2, according to one or more embodiments of the present disclosure.

With reference to FIG. 3, the internal structure of the prismatic secondary battery and the coupling structure with the cap assembly 60 will be further described.

As shown in FIG. 3, a prismatic secondary battery may include an electrode assembly 40, a first current collector 41, a first terminal 62, a second current collector 42, a second terminal 63, a case 51, and a cap assembly 60.

The electrode assembly 40 may be formed by winding or stacking a stack of a first electrode plate, a separator, and a second electrode plate, which are formed as thin plates or films. If the electrode assembly 40 is a wound stack, a winding axis may be parallel to the longitudinal direction (e.g., the y direction) of the case 51. In one or more other embodiments, the electrode assembly 40 may be a stack type rather than a winding type, and the shape of the electrode assembly 40 is not limited in the present disclosure. In addition, the electrode assembly 40 may be a Z-stack electrode assembly in which a positive electrode plate and a negative electrode plate are inserted into both sides of a separator, which is then bent into a Z-stack. In addition, one or more electrode assemblies may be stacked such that long sides of the electrode assemblies are adjacent to each other and accommodated in the case, and the number of electrode assemblies in the case is not limited in the present disclosure.

The first electrode plate of the electrode assembly may act as a negative electrode, and the second electrode plate may act as a positive electrode. Of course, the reverse is also possible.

The first electrode plate may be formed by applying a first electrode active material, such as graphite, carbon, or the like, to a first electrode current collector formed of a metal foil, such as copper, a copper alloy, nickel, a nickel alloy, or the like. The first electrode plate may include a first electrode tab 43 (e.g., a first uncoated portion) that is a region to which the first electrode active material is not applied. The first electrode tab 43 may act as a current flow path between the first electrode plate and the first current collector 41. In one or more embodiments, at the time that the first electrode plate is manufactured, the first electrode tab 43 may be formed by being cut in advance to protrude to one side of the electrode assembly 40, or the first electrode tab 43 may protrude to one side of the electrode assembly 40 more than (e.g., farther than or beyond) the separator without being separately cut.

The second electrode plate may be formed by applying a second electrode active material, such as a transition metal oxide, on a second electrode current collector formed of a metal foil, such as aluminum or an aluminum alloy. The second electrode plate may include a second electrode tab 44 (e.g., a second uncoated portion) that is a region to which the second electrode active material is not applied.

The second electrode tab 44 may act as a current flow path between the second electrode plate and the second current collector 42. In one or more embodiments, the second electrode tab 44 may be formed by being cut in advance to protrude to the other side (e.g., the opposite side) of the electrode assembly at the time that the second electrode plate is manufactured, or the second electrode plate may protrude to the other side of the electrode assembly more than (e.g., farther than or beyond) the separator without being separately cut.

In FIG. 3, the first electrode tab 43 and the second electrode tab 44 are shown as being located on a right side surface and a left side surface of the electrode assembly 40, respectively. However, in one or more other embodiments, the first electrode tab 43 and the second electrode tab 44 may both be located on the right side surface or the left side surface of the electrode assembly 40. In addition, in still other embodiment(s), the first electrode tab 43 and the second electrode tab 44 may be located on an upper surface of the electrode assembly 40.

Here, the left side surface, the right side surface, and the upper surface of the electrode assembly 40 are based on the secondary battery shown in FIGS. 2 and 3 for convenience of description. The left side surface is a surface to which the second current collector 42 is bonded among vertical side surfaces of the electrode assembly 40, and the right side surface is a surface which is opposite to the left surface and to which the first current collector 41 is bonded. In addition, the upper surface is a surface which faces the cap assembly 60, on which the first terminal 62 and the second terminal 63 are installed, among horizontal surfaces of the electrode assembly 40. Accordingly, the names of the terms used above, such as the left side surface, the right side surface, and the upper surface of the electrode assembly 40, may be changed if the secondary battery is rotated laterally or vertically.

The separator prevents or substantially reduces instances of a short circuit between the first electrode and the second electrode while allowing movement of lithium ions therebetween. The separator may be made of, for example, a polyethylene film, a polypropylene film, a polyethylene-polypropylene film, or the like.

In one or more embodiments, the electrode assembly 40 is accommodated in the case 59 along with an electrolyte.

In the electrode assembly 40, the first current collector 41 and the second current collector 42 may be welded and connected to the first electrode tab 43 extending from the first electrode plate and the second electrode tab 44 extending from the second electrode plate, respectively. As mentioned above, in one or more embodiments in which the first electrode tab 43 and the second electrode tab 44 are located at the top of the electrode assembly 40, the first and second current collectors are located at the top of the electrode assembly 40.

As illustrated in FIG. 3, the first current collector 41 and the second current collector 42 are connected to the first terminal 62 and the second terminal 63 through connection members 67, respectively. In one or more embodiments, the connection members 67 may each have an outer peripheral surface that is threaded, and may be fastened to the first terminal 62 and the second terminal 63 by screwing. However, the present disclosure is not limited thereto. For example, the connection members 67 may also be coupled to the first terminal 62 and the second terminal 63 by riveting or welding.

As described above, the secondary battery shown in FIG. 3 has a side-tab structure in which the electrode assembly 40 is disposed such that the first electrode tab 43 and the second electrode tab 44 are located on a right side and a left side of the secondary battery. In addition, since the first terminal 62 and the second terminal 63 are located on the case 59, the secondary battery falls into a category of a top-terminal structure. That is, the secondary battery has a structure in which the first electrode tab 43 and the second electrode tab 44 of the electrode assembly 40 are located on the right and left side surfaces of the electrode assembly 40 in the case 59, the first current collector 41 and the second current collector 42 are respectively connected to the first electrode tab 43 and the second electrode tab 44 (at the tabs' right and left ends, and the first terminal 62 and the second terminal 63 are respectively connected to the current collectors 41 and 42 which are installed outside the cap plate 61.

In the cylindrical and prismatic secondary batteries of the types described above with reference to FIGS. 1 to 3, the degassing device for discharging gas is shown as being installed on the cap assembly 50 or 60, but in one or more other embodiments, the degassing device may be installed on another cap assembly or case at a location opposite to the cap assembly 50 or 60.

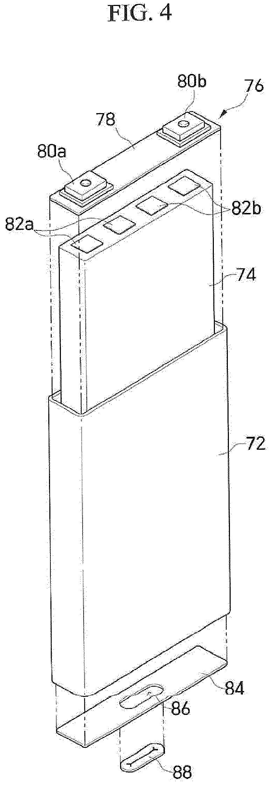

As described above, a degassing device installed at a location opposite to the cap assembly 50 or 60 will be described with reference to FIG. 4.

FIG. 4 illustrates a secondary battery according to an embodiment in which a degassing device is located on a surface opposite to the cap assembly of FIGS. 1, 2, and 3. An electrode assembly 74 of a jelly roll or stack type is embedded inside a case 72, and a cap assembly 76 is located on an upper opening of the case 72. The cap assembly 76 includes a first cap plate 78, a first terminal 80a, and a second terminal 80b.

Although first electrode tabs 82a and second electrode tabs 82b are illustrated in FIG. 4 as being located on an upper surface of the electrode assembly 74 inside the case 72, FIG. 4 conceptually illustrates a specific example, and the present disclosure and the following embodiments are not limited thereto. For example, there may also be a secondary battery with a so-called side-tab structure in which electrode tabs are located on both side surfaces.

A second cap plate 84 may be installed in an opening of a lower portion of the case 72 (that is, as described above, at a location opposite to the cap assembly 76 or the first cap plate 78). A gas discharge hole 86 may be formed in the second cap plate 84, and a degassing device 88 formed to be ruptured by gas generated inside the case 72 may be attached to the gas discharge hole 86 through welding or the like. In another embodiment, there may be no second cap plate 84, and a gas discharge hole may be formed directly in a lower surface of the case 72, and the degassing device 88 may be bonded to the gas discharge hole.

A secondary battery including the degassing device of the type shown in FIG. 4 may be applied to a secondary battery (so-called "tall cell") of which a vertical length is extended more than a horizontal length, but the present disclosure is not limited thereto.

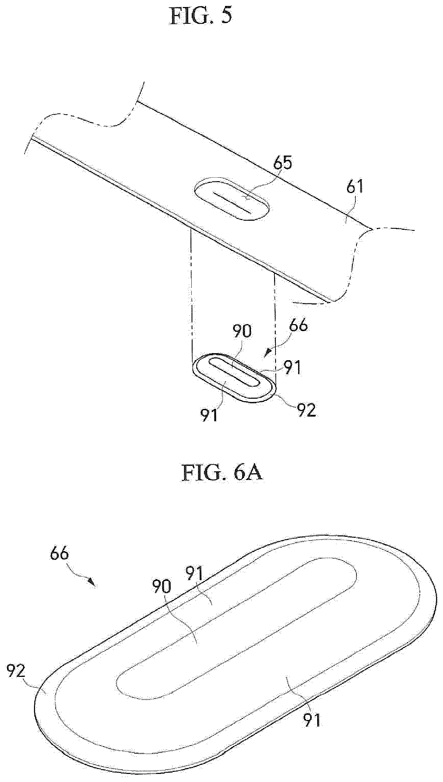

FIG. 5 is a schematic view illustrating a configuration of a degassing device according to one or more embodiments of the present disclosure.

A gas discharge hole 65 may be formed in a cap plate 61, and a degassing device 66 may be assembled and bonded to the gas discharge hole 65. In the embodiment of FIG. 5, the degassing device 66 may be bonded to the gas discharge hole 65 from bottom to top. The degassing device 66 may include a central portion 90 exposed to the outside of a battery through an opening of the gas discharge hole 65, and a peripheral portion 91 around the central portion 90. The peripheral portion 91 may form an outer contour of the degassing device 66 and may be connected to a bonding portion 92 that is bonded to a circumferential periphery of the gas discharge hole 65 of the cap plate 61. The bonding portion 92 may be bonded to the cap plate 61 through welding.

In FIG. 5, the peripheral portion 91 may have a curved sloped surface rising toward the central portion 90 so that the central portion 90 and the peripheral portion 91 form a shape that is convex toward the outside of the battery, but the present disclosure is not limited thereto. For example, the peripheral portion 91 may have a straight sloped surface rising toward the central portion 90, and the central portion 90 may have a flat surface so that the degassing device 66 may have a trapezoidal shape pressed flat toward the outside of the battery. As another example, the peripheral portion 91 may have a curved sloped surface rising toward the central portion 90, and the central portion 90 may have a flat surface. In still another example, the peripheral portion 91 and/or the central portion 90 may be a flat plate that is parallel to the cap plate therearound or a surface of a case.

In addition, a shape of the degassing device 66 is illustrated in FIG. 5 as being an oval shape, but the present disclosure is not limited thereto. For example, the degassing device 66 may also be manufactured to have a circular shape, a quadrangular shape, or the like.

The same material as that of the case or cap plate of the battery may be used as a material of the degassing device 66, but another material may be used. For example, the degassing device 66 may be made of aluminum or stainless steel.

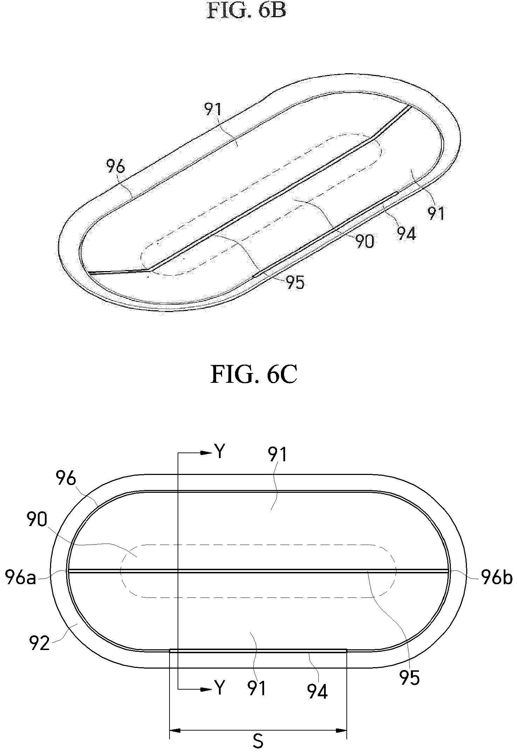

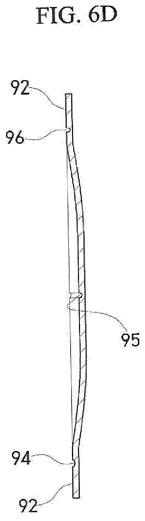

FIG. 6A is a top perspective view of a degassing device 66 according to one or more embodiments of the present disclosure, and FIG. 6B is a bottom perspective view of the degassing device 66 of FIG. 6A. FIG. 6C is a bottom plan view of the degassing device 66, and FIG. 6D is a cross-sectional view along line Y-Y of FIG. 6C.

Referring to the top perspective view of FIG. 6A and the cross-sectional view of FIG. 6D, a bonding portion 92 may be provided on a perimeter of an outline of the oval-shaped degassing device 66, and the degassing device 66 may have a shape in which a sloped surface rising from the bonding portion 92 to a central portion 90 along a peripheral portion 91 converges at the central portion 90 and is convex upward. Accordingly, referring to FIGS. 6A and 6B, a lower surface may have a concave shape.

Referring to the bottom perspective view of FIG. 6B and the bottom plan view of FIG. 6C, a notch 96 is formed parallel to the outline inside the outline formed by the bonding portion 92. The notch 96 may be a groove formed to be ruptured if pressure of gas generated inside the case of the secondary battery (for example, 10 in FIG. 1, 59 in FIG. 2, or 72 in FIG. 4) exceeds a certain pressure.

A main hinge 94 may be formed as a groove on a line defined by the notch 96. If the notch 96 is ruptured by the pressure of gas inside a battery, the peripheral portion 91 and the central portion 90 are folded around the main hinge 94 (the main hinge 94 is not broken), thereby preventing the degassing device from being separated from a cap plate or a case of the battery. The main hinge 94 may be formed on a straight portion S of the notch 96 as shown in FIG. 6C.

Referring to FIG. 6B, it can be seen that a sub-hinge 95 may be formed parallel to the main hinge 94 at a location spaced apart from the main hinge 94. In FIG. 6C, the sub-hinge 95 may be formed from a location adjacent to a first point 96a of the notch 96 on a long axis of the degassing device 66 (that is, an axis parallel to the main hinge 94) to a location adjacent to a second point 96b of the notch 96 opposite to the first point 96a. However, the sub-hinge 95 does not necessarily have to be located on the long axis.

The sub-hinge 95 serves to secondarily bend the peripheral portion 91 and the central portion 90, which are primarily folded by the main hinge 94, if the notch 96 is ruptured due to pressure of gas inside the battery. That is, if the notch 96 is ruptured and the degassing device 66 is opened, the main hinge 94 serves as an overall primary hinge, and the sub-hinge 95 serves as a secondary hinge around which the opened degassing device 66 may be additionally bent.

FIGS. 6B to 6D illustrate an embodiment in which the main hinge 94, sub-hinge 95, and notch 96 are formed in a lower surface of the degassing device 66 (a surface facing the inside of the case of the battery), but in one or more other embodiments, the main hinge 94, the sub-hinge 95, and the notch 96 may be formed in an upper surface of the degassing device 66 (a surface facing the outside of the case of the battery). In another embodiment, the main hinge 94, the sub-hinge 95, and the notch 96 may be formed at different locations (for example, the main hinge 94 and the sub-hinge 95 may be formed in the lower surface, and the notch 96 may be formed in the upper surface).

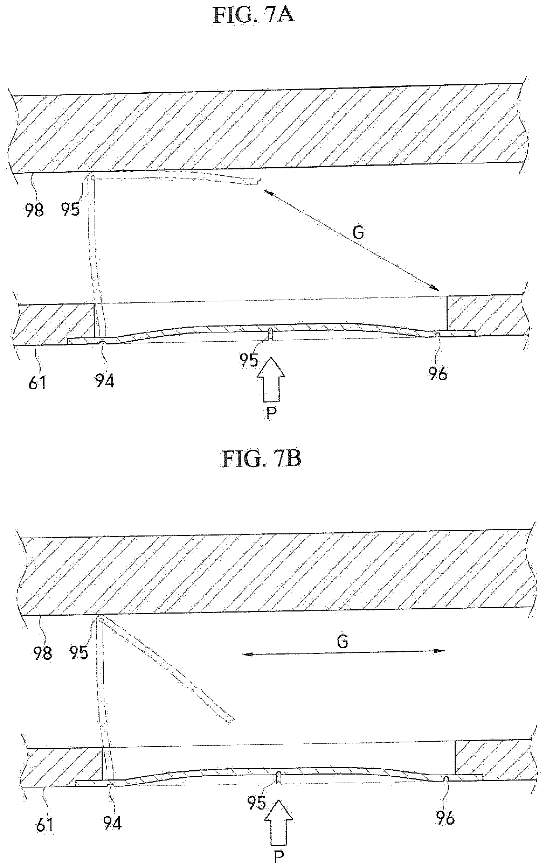

FIGS. 7A to 7C are for describing the operation of a degassing device 66 according to one or more embodiments of the present disclosure. These drawings are cross-sectional views illustrating the degassing device 66 bonded to a gas discharge hole 65 of a cap plate 61. In another embodiment, as described above, the gas discharge hole 65 may be formed in a case of a battery.

In FIGS. 7A to 7C, a bonding portion 92 of the degassing device 66 may be welded to a lower surface of a peripheral portion of the gas discharge hole 65. A main hinge 94 is seen to be provided at a left side, and a notch 96 is seen to be disposed at a right side. A sub-hinge 95 is seen to be disposed in the middle between the main hinge 94 and the notch 96.

The main hinge 94, the sub-hinge 95, and/or the notch 96 may have a cross-sectional shape of an approximately trapezoidal, angled U-shaped, or round U-shaped groove, but the present disclosure is not limited thereto. For example, the main hinge 94, the sub-hinge 95, and the notch 96 may have a shape of a wedge-shaped or triangular groove. The main hinge 94, the sub-hinge 95, and the notch 96 have different purposes and operations, and thus profiles thereof may be set differently. For example, the profile of the notch 96 may be designed such that the notch 96 is ruptured if pressure inside the battery reaches a certain value. The profile of the main hinge 94 may be designed such that the main hinge 94 maintains mechanical properties without breaking to hold the degassing device 66 so that the degassing device 66 is not separated and is bent to open the gas discharge hole 65. The profile of the sub-hinge 95 may be designed such that, if the notch 96 is ruptured and the degassing device 66 is bent around the main hinge 94 and opened, the degassing device 66 is caught by a structure 98 above the cap plate 61 or the case and is folded.

To this end, for example, a groove depth of the main hinge 94 or the sub-hinge 95 may be designed to be smaller than a groove depth of the notch 96. In addition or alternatively, a transverse width of a groove of the main hinge 94 or sub-hinge 95 may be designed to be greater than a transverse width of a groove of the notch 96. The reason may be because the notch 96 should be ruptured by pressure, but the main hinge 94 or sub-hinge 95 should have a spare space for bending after the notch 96 is ruptured. A recessed depth and transverse width of the main hinge 94 may be substantially the same as those of the sub-hinge 95.

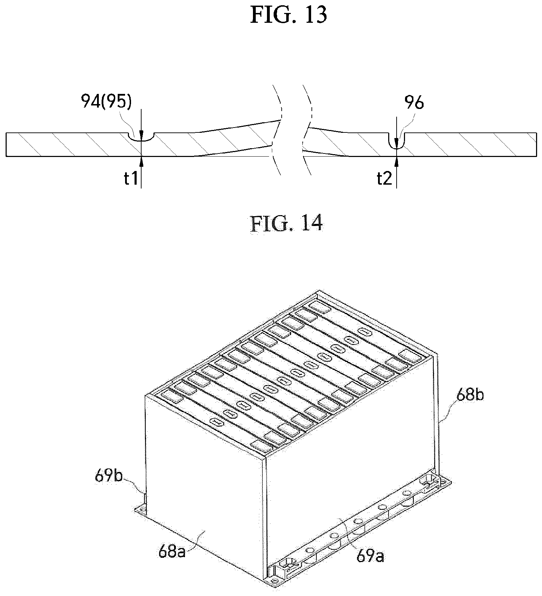

FIG. 13 is a cross-sectional view of a main hinge 94 or sub-hinge 95 and a notch 96 according to one or more embodiments of the present disclosure.

As described above, only the notch 96 should be ruptured by internal pressure of a battery and the main hinge 94 should remain attached to a degassing device 66, and thus a wall thickness t1 of the main hinge 94 may be designed to be greater than a wall thickness t2 of the notch 96, preferably about 1.1 times to about 3 times the thickness t2. If the wall thickness t1 is less than 1.1 times the wall thickness t2 (t1 < 1.1 ×t2), there may be insufficient strength to function as a hinge, and if the wall thickness t1 exceeds 3 **times the** wall thickness t2 (t1 > 3 ×t2), it may be too strong to hinder the opening of the degassing device 66.

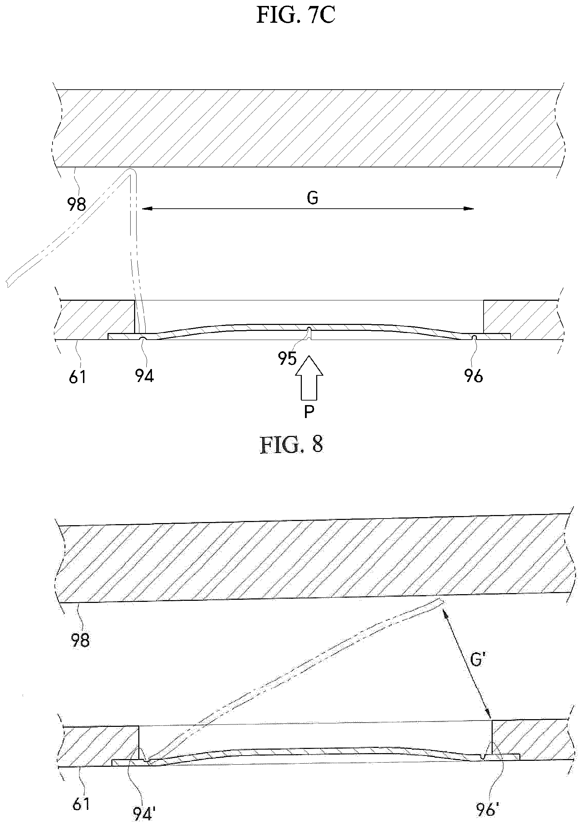

Prior to describing the operation of the degassing device 66 according to one or more embodiments of the present disclosure shown in FIGS. 7A to 7C, a comparative example of a degassing device 66 shown in FIG. 8 will first be described.

FIG. 8 illustrates a state in which a degassing device bonded to a cap plate 61 is bent around a hinge 94' due to the notch 96' being ruptured by pressure in a battery. Although the degassing device should be bent and further folded, the degassing device may be caught by a structure 98 (component of a battery module/pack such as a busbar, a housing, or a gas/heat discharge passage) placed above the cap plate 61 and thus does not have a sufficient opening angle. As a result, a gas discharge area is limited to G'. **In** addition, in this case, the degassing device may damage a wire, cause a short circuit, or block a gas/heat discharge passage.

Referring again to FIGS. 7A to 7C, the operation of the degassing device 66 according to one or more embodiments of the present disclosure will be described.

Referring to FIG. 7A, if the notch 96 of the degassing device 66 is ruptured by pressure P generated in the battery and the degassing device 66 is folded around the main hinge 94 and opened, even if the degassing device 66 is caught by the structure 98 above the battery, the degassing device 66 may be folded in the form shown in FIG. 7A around the sub-hinge 95. As a result, it is possible to secure a gas discharge area G that is larger than G' in FIG. 8.

FIG. 7B illustrates a folding form of the sub-hinge 95 which is different from that of FIG. 7A and illustrates a case in which the notch 96 of the degassing device 66 may be ruptured by pressure **P,** and the degassing device 66 is caught by the structure 98 while opened around the main hinge 94 so that the degassing device 66 may be folded in the illustrated form around the sub-hinge 95. As a result, it is possible to secure a gas discharge area G that is larger than G' in FIG. 8. There may be a difference from the gas discharge area in FIG. 7A. **In** the case of FIG. 7B, a contact range of the opened degassing device 66 with the structure 98 may be smaller than the case of **FIG.** 7A, and thus the possibility of occurring problems such as a short circuit of a wire or blockage of a flow passage can be reduced.

FIG. 7C illustrates a bending form which is different from that of FIG. 7A or 7B. The notch 96 of the degassing device 66 may be ruptured by pressure P, and the degassing device 66 may be caught by the structure 98 while opened around the main hinge 94 so that the degassing device 66 may be bent in the illustrated form around the sub-hinge 95. As a result, it is possible to secure a gas discharge area G that is larger than G' in FIG. 8. In this case of such folding, a much larger gas discharge area G can be secured as compared to the cases of FIGS. 7A and 7B.

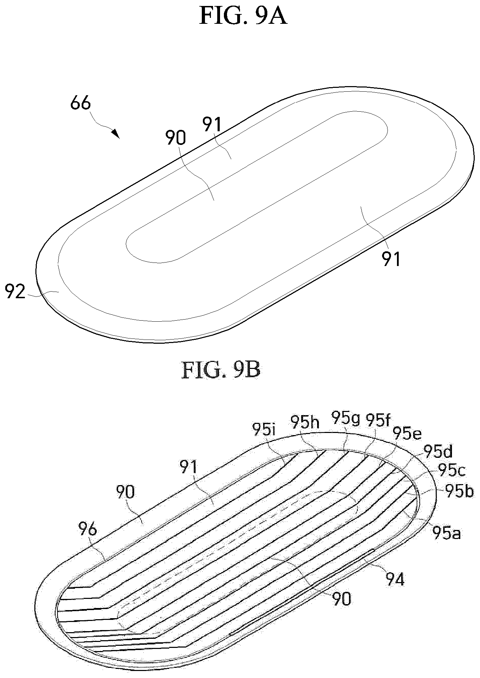

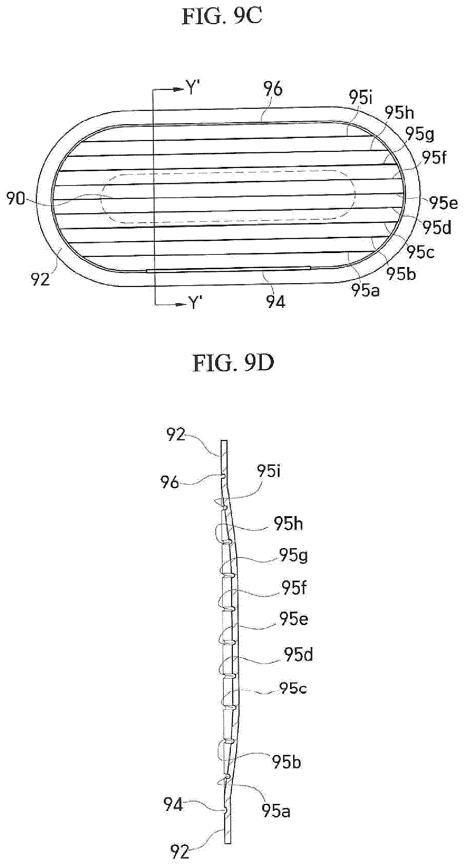

FIG. 9A is a top perspective view of a degassing device 66 according to one or more other embodiments of the present disclosure, and FIG. 9B is a bottom perspective view of the degassing device 66 of FIG. 9A. FIG. 9C is a bottom plan view of the degassing device 66, and FIG. 9D is a cross-sectional view along line Y'-Y' of FIG. 9C.

Similar to that described above with reference to FIGS. 6A to 6D, a bonding portion 92 is provided around an outline of the oval-shaped degassing device 66, and a sloped surface rising from the bonding portion 92 to a central portion 90 along a peripheral portion 91 converges at the central portion 90 and forms a shape that is convex upward. A notch 96 may be formed parallel to an outline that may be inside of the outline formed by the bonding portion 92. Amain hinge 94 may be formed on a line drawn by the notch 96.

As different components from that of FIGS. 6A to 6D, a plurality of sub-hinges 95a, 95b, ..., and 95i may be formed parallel to the main hinge 94. The sub-hinges 95a, 95b, ..., and 95i may be arranged on a plurality of axes parallel to the main hinge 94 at locations spaced apart from the main hinge 94 and may be formed span from a location adjacent to a first point 96a (see FIG. 6C) of the notch to a location adjacent to a second point 96b (see FIG. 6C) opposite to the first point 96a. If the notch 96 is ruptured by the pressure of gas in a battery and the degassing device 66 is opened, the main hinge 94 serves as an overall primary hinge, and the sub-hinges 95a, 95b,., and 95i serve as secondary hinges around which the opened degassing device 66 may be additionally bent.

Even in this case, the main hinge 94, the sub-hinges 95a, 95b, ..., and 95i, and the notch 96 are shown as being formed in a lower surface of the degassing device 66 (a surface facing the inside of a case of the battery). In one or more other embodiments, the main hinge 94, the sub-hinges 95a, 95b, ..., and 95i, and the notch 96 may be formed in an upper surface of the degassing device 66 (a surface facing the outside of the case of the battery). In another embodiment, the main hinge 94, the sub-hinges 95a, 95b, ..., and 95i, and the notch 96 may be formed at different locations (for example, the main hinge 94 and the sub-hinges 95a, 95b ,..., and 95i may be formed in the lower surface, and the notch 96 may be formed in the upper surface).

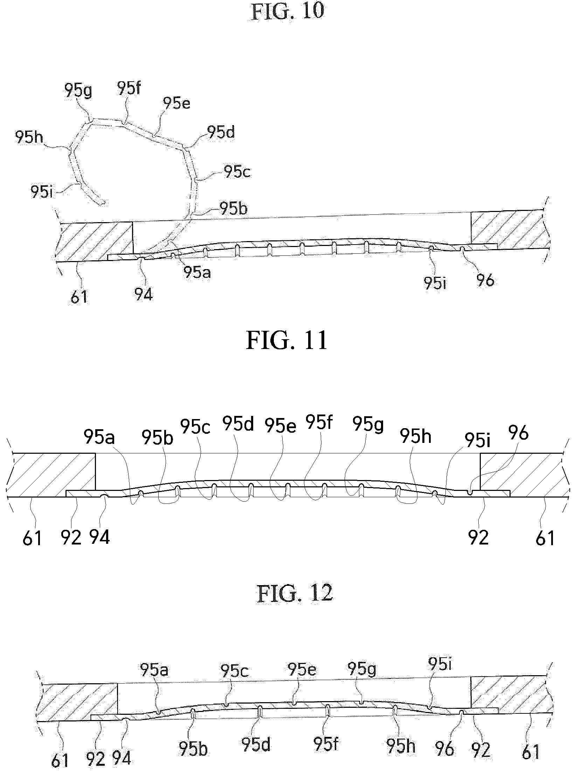

FIG. 10 illustrates the operation of the degassing device 66 according to the embodiment shown in FIGS. 9A to 9D.

Referring to FIG. 10, if the notch 96 of the degassing device 66 is ruptured by pressure generated in the battery, and the degassing device 66 is opened around the main hinge 94 and caught by a structure above the cap plate 61, and also, even if the degassing device 66 is not caught, the plurality of sub-hinges 95a, 95b, ..., and 95i can be sequentially rolled and bent as shown. As a result, one sub-hinge can secure a larger gas discharge area as compared to the cases of the above embodiments in which one sub-hinge is provided, and a contact range with a wire or a gas/heat discharge passage can be considerably reduced.

FIG. 11 illustrates a modified embodiment of the embodiment of FIG. 9D in which a notch 96 is formed at a location opposite to a position at which grooves of a main hinge 94 and sub-hinges 95a, 95b, ..., and 95i are formed. In FIG. 9D above, the main hinge 94, the sub-hinges 95a, 95b, ..., and 95i, and the notch 96 are all formed in the lower surface of the degassing device 66, but in the case of the embodiment of FIG. 11, the notch 96 is formed in the upper surface opposite to the lower surface in which the main hinge 94 and the sub-hinges 95a, 95b, ..., and 95i are formed. In other words, an opening of the notch 96 may point upward, while openings of the main hinge 94 and the one or more sub-hinges 95a, 95b... 95i may point downward.

FIG. 12 illustrates another modified embodiment and illustrates that sub-hinges 95a, 95b, ..., and 95i may be alternately arranged on an upper surface and a lower surface of the degassing device. **In** this case, the opened degassing device 66 may be bent in the form of a corrugated box of an accordion.

The formation locations of the main hinge 94, the sub-hinges 95a, 95b, ..., and 95i, and the notch 96 may be designed to intentionally induce the direction and form of primary bending and the direction and form of secondary bending of the degassing device 66.

Hereinafter, a method of manufacturing a secondary battery including the above-described degassing device will be described. The method of manufacturing a secondary battery according to one or more embodiments of the present disclosure includes: forming a gas discharge hole in one of a case and a cap plate; manufacturing a degassing device for discharging gas from inside the case; and bonding the degassing device to the gas discharge hole.

**In** one or more embodiments, the manufacturing of the degassing device may include: forming a bonding portion to be bonded to a circumferential periphery of the gas discharge hole formed in one of the case and the cap plate; forming a central portion exposed to an outside of the case through the gas discharge hole; forming a peripheral portion that is a surface for connecting the bonding portion and the central portion; forming a notch in the peripheral portion along an outline of the bonding portion; forming a main hinge on a line defined by the notch; and forming one or more sub-hinges to be parallel to the main hinge at one or more locations spaced apart from the main hinge.

In one or more embodiments, the sub-hinge(s) of the degassing device may span from a location adjacent to a first point of the notch to a location adjacent to a second point of the notch opposite to the first point.

In one or more embodiments, at least one of the main hinge, the sub-hinge(s), and the notch of the degassing device may be formed to face an inside of the case.

In one or more other embodiments, the notch of the degassing device may be formed at a location opposite to a formation location of the main hinge and the sub-hinge.

In yet one or more other embodiments, in the one or more sub-hinges of the degassing device, sub-hinges formed to face an inside of the case and sub-hinges formed to face the outside of the case may be alternately formed.

Hereinafter, any material that is usable for the secondary battery according to one or more embodiments of the present disclosure will be described.

As the positive electrode active material, a compound capable of reversibly intercalating/deintercalating lithium (e.g., a lithiated intercalation compound) may be used. For example, at least one of a composite oxide of lithium and a metal selected from cobalt, manganese, nickel, or combinations thereof may be used.

The composite oxide may be a lithium transition metal composite oxide, and examples thereof may include a lithium nickel-based oxide, a lithium cobalt-based oxide, a lithium manganese-based oxide, a lithium iron phosphate-based compound, a cobalt-free nickel-manganese-based oxide, or a combination thereof.

As an example, a compound represented by any one of the following formulas may be used as the composite oxide: LiₐA_{1-b}X_{b}O_{2-c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}Co_{b}X_{c}O_{2-α}D_{α} (0.90≤a≤1.8, 0≤b≤0.5, 0≤c≤0.5, 0<α<2); LiₐNi_{1-b-c}Mn_{b}X_{c}O_{2-α}D_{α} (0.90≤a≤1.8, 0≤b≤0.5, 0≤c≤0.5, 0<α<2); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); LiₐFePO₄ (0.90≤a≤1.8), and/or the like.

In the above formulas: A is Ni, Co, Mn, or a combination thereof; X is Al, Ni, Co, Mn, Cr, Fe, Mg, Sr, V, a rare earth element, or a combination thereof; D is O, F, S, P, or a combination thereof; G is Al, Cr, Mn, Fe, Mg, La, Ce, Sr, V, or a combination thereof; and L¹ is Mn, Al, or a combination thereof.

A positive electrode for a lithium secondary battery may include a current collector and a positive electrode active material layer formed on the current collector. The positive electrode active material layer may include a positive electrode active material and may further include a binder and/or a conductive material.

**In** one or more embodiments, the content of the positive electrode active material may be in a range of about 90 wt% to about 99.5 wt% on the basis of 100 wt% of the positive electrode active material layer, and the content of the binder and the conductive material may be in a range of about 0.5 wt% to about 5 wt%, respectively, on the basis of 100 wt% of the positive electrode active material layer.

The current collector may be aluminum (Al) but is not limited thereto.

The negative electrode active material may include a material capable of reversibly intercalating/deintercalating lithium ions, lithium metal, an alloy of lithium metal, a material capable of being doped and undoped with lithium, a transition metal oxide, and/or the like.

The material capable of reversibly intercalating/deintercalating lithium ions may be a carbon-based negative electrode active material, which may include, for example, crystalline carbon, amorphous carbon, or a combination thereof. Examples of the crystalline carbon may include graphite, such as natural graphite or artificial graphite, and examples of the amorphous carbon may include soft carbon, hard carbon, a pitch carbide, a meso-phase pitch carbide, sintered coke, and the like.

A Si-based negative electrode active material or a Sn-based negative electrode active material may be used as the material capable of being doped and undoped with lithium. The Si-based negative electrode active material may be silicon, a silicon-carbon composite, SiOₓ (0 < x < 2), a Si-based alloy, or a combination thereof.

The silicon-carbon composite may be a composite of silicon and amorphous carbon. According to one or more embodiments, the silicon-carbon composite is in the form of a silicon particle and amorphous carbon coated on the surface of the silicon particle.

The silicon-carbon composite may further include crystalline carbon. For example, the silicon-carbon composite may include a core including crystalline carbon and silicon particle and an amorphous carbon coating layer on the surface of the core.

A negative electrode for a lithium secondary battery may include a current collector and a negative electrode active material layer disposed on the current collector. The negative electrode active material layer may include a negative electrode active material and may further include a binder and/or a conductive material.

For example, the negative electrode active material layer may include about 90 wt % to about 99 wt % of a negative electrode active material based on 100 wt % of the negative electrode active material, about 0.5 wt % to about 5 wt % of a binder, and about 0 wt % to about 5 wt % of a conductive material.

A non-aqueous binder, an aqueous binder, a dry binder, or a combination thereof may be used as the binder. If an aqueous binder is used as the negative electrode binder, a cellulose-based compound capable of imparting viscosity may be further included.

As the negative electrode current collector, one selected from copper foil, nickel foil, stainless steel foil, titanium foil, nickel foam, copper foam, conductive metal-coated polymer substrate, or combinations thereof may be used.

An electrolyte for a lithium secondary battery may include a non-aqueous organic solvent, a lithium salt, and/or the like.

The non-aqueous organic solvent acts as a medium through which ions involved in the electrochemical reaction of the battery can move.

The non-aqueous organic solvent may be a carbonate-based, an ester-based, an ether-based, a ketone-based, an alcohol-based solvent, an aprotic solvent, and may be used alone or in combination of two or more.

In addition, if a carbonate-based solvent is used, a mixture of cyclic carbonate and chain carbonate may be used.

Depending on the type of lithium secondary battery, a separator may be present between the first electrode plate (e.g., the negative electrode) and the second electrode plate (e.g., the positive electrode). The separator may include polyethylene, polypropylene, polyvinylidene fluoride, or a multilayer film of two or more layers thereof.

The separator may include a porous substrate and a coating layer including an organic material, an inorganic material, or a combination thereof on one or both surfaces of the porous substrate.

The organic material may include a polyvinylidene fluoride-based polymer or a (meth)acrylic polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, or combinations thereof, but is not limited thereto.

The organic material and the inorganic material may be mixed in one coating layer or may be in the form of a coating layer containing an organic material and a coating layer containing an inorganic material that are laminated on each other.

FIG. 14 is a view of a secondary battery module in which prismatic secondary batteries are arranged according to one or more embodiments of the present disclosure. With the increase in secondary battery capacity for driving electric vehicles or the like, a secondary battery module may be manufactured by arranging and connecting a plurality of secondary battery cells transversely and/or longitudinally. The plurality of secondary batteries may be arranged in a space defined by a pair of facing end plates 68a and 68b and a pair of facing side plates 69a and 69b. The secondary batteries may be designed appropriately in a suitable arrangement (e.g., direction) and number to obtain desired voltage and current capabilities.

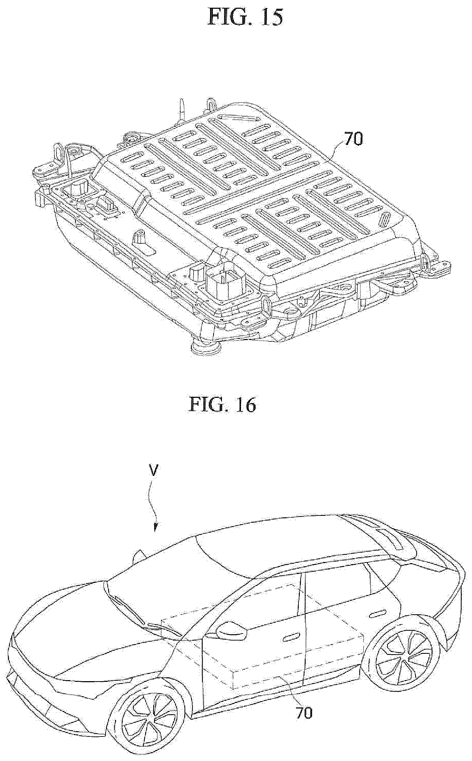

FIG. 15 is a view schematically showing the configuration of a battery pack 70 according to one or more embodiments of the present disclosure. Referring to FIG. 15, a battery pack 70 may include an assembly to which individual batteries are electrically connected and a pack housing accommodating the same. In the drawings, for convenience of illustration, components including a bus bar, a cooling unit, external terminals for electrically connecting batteries, etc., are not shown.

The battery pack 70 may be mounted on (or in) a vehicle. The vehicle may be, for example, an electric vehicle, a hybrid vehicle, or a plug-in hybrid vehicle. The vehicle may be a four-wheeled vehicle or a two-wheeled vehicle, but is not limited thereto. FIG. 16 shows a vehicle V which includes the battery pack 70 shown in FIG. 15 on the lower body thereof. The vehicle V may operate by (e.g., may be powered by) receiving power from the battery pack 70.

From the foregoing, according to the present disclosure, if a notch is ruptured by pressure generated in a battery and thus folded and opened around a main hinge, even if a degassing device is caught by a structure above a battery, the degassing device can be bent in various forms, thereby securing a wide gas discharge area. Interference with module or pack structures, wires, and gas/heat discharge passages can be reduced, thereby reducing the possibility of problems such as electrical short circuits and channel blockages.

The degassing device may be installed in the cap assembly or installed on the case. **In** a cylindrical battery, a degassing device may be located between a cap-up and a subplate as a portion of a cap assembly, and in a prismatic battery, a degassing device may be bonded to a hole formed in a cap plate, or in some cases, bonded to a hole formed in a battery case.

Example embodiments have been disclosed herein, and although specific terms are employed, they are used and are to be interpreted in a generic and descriptive sense only and not for purpose of limitation. **In** some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of ordinary skill in the art that various changes in form and details may be made without departing from the scope of the present invention as set forth in the following claims.

## Claims

1. A secondary battery, comprising:
a case with an opening therein;
an electrode assembly accommodated in the case;
a cap plate bonded to the opening of the case; and
a degassing device bonded to a gas discharge hole in one of the case and the cap plate to discharge gas from inside the case,
wherein the degassing device includes:
a central portion exposed to an outside of the case through the gas discharge hole;
a bonding portion bonded to a circumferential periphery of the gas discharge hole;
a peripheral portion that is a surface for connecting the bonding portion and the central portion;
a notch in the peripheral portion along an outline of the bonding portion;
a main hinge on a line defined by the notch; and
one or more sub-hinges parallel to the main hinge at one or more locations spaced apart from the main hinge.

2. The secondary battery as claimed in claim 1, wherein the peripheral portion of the degassing device has a sloped surface that rises from the bonding portion toward the central portion.

3. The secondary battery as claimed in claim 1 or claim 2, wherein the one or more sub-hinges of the degassing device span from a location adjacent to a first point of the notch to a location adjacent to a second point of the notch opposite to the first point.

4. The secondary battery as claimed in any one of the preceding claims, wherein a cross-sectional shape of the main hinge, a cross-sectional shape of the one or more sub-hinges, and a cross-sectional shape of the notch in the degassing device are each one shape of a trapezoid shape, an angled U-shape, and a round U-shape.

5. The secondary battery as claimed in any one of the preceding claims, wherein a groove depth of the main hinge and a groove depth of the one or more sub-hinges in the degassing device are each less than a groove depth of the notch.

6. The secondary battery as claimed in any one of the preceding claims, wherein a width of the main hinge and a width of the one or more sub-hinges in the degassing device are each greater than a width of the notch.

7. The secondary battery as claimed in any one of the preceding claims, wherein each of a wall thickness of the main hinge and a wall thickness of the one or more sub-hinges in the degassing device is 1.1 times to 3 times greater than a wall thickness of the notch.

8. The secondary battery as claimed in any one of the preceding claims, wherein at least one of the main hinge, the one or more sub-hinges, and the notch of the degassing device faces an inside of the case.

9. The secondary battery as claimed in any one of the preceding claims, wherein the notch of the degassing device has an opening pointing opposite to openings of the main hinge and the one or more sub-hinges.

10. The secondary battery as claimed in any one of the preceding claims, wherein the one or more sub hinges alternate between facing an inside of the case and facing the outside of the case.

11. A method of manufacturing a secondary battery, the method comprising:
forming a gas discharge hole in one of a case and a cap plate;
manufacturing a degassing device for discharging gas inside the case; and
bonding the degassing device to the gas discharge hole,
wherein the manufacturing of the degassing device includes:
forming a bonding portion to be bonded to a circumferential periphery of the gas discharge hole formed in one of the case and the cap plate;
forming a central portion exposed to an outside of the case through the gas discharge hole;
forming a peripheral portion that is a surface for connecting the bonding portion and the central portion;
forming a notch in the peripheral portion along an outline of the bonding portion;
forming a main hinge on a line defined by the notch; and
forming one or more sub-hinges to be parallel to the main hinge at one more locations spaced apart from the main hinge.

12. The method as claimed in claim 11, wherein the one or more sub-hinges of the degassing device span from a location adjacent to a first point of the notch to a location adjacent to a second point of the notch opposite to the first point.

13. The method as claimed in claim 11 or claim 12, wherein at least one of the main hinge, the one or more sub-hinges, and the notch of the degassing device faces an inside of the case.

14. The method as claimed in any one of claims 11 to 13, wherein the notch of the degassing device is formed at a location with an opening pointing opposite to an opening of the main hinge and one or more openings of the one or more sub-hinges.

15. The method as claimed in any one of claims 11 to 14, wherein the one or more sub-hinges comprise a plurality of sub-hinges which are formed alternately between facing an inside of the case and facing the outside of the case.
